# EUROPÄISCHE PATENTSCHRIFT

(11) **EP 0 465 720 B1**
(45) Veröffentlichungstag und Bekanntmachung des Hinweises auf die Patenterteilung: **17.04.1996**
(21) Anmeldenummer: 90122801.5
(22) Anmeldetag: 29.11.1990
(51) Int. Cl.: H01J 49/04

(54) **Analysenvorrichtung mit elektrothermischem Atomisator und Massenspektrometer zur Atom- und Molekülanalyse**
Analysing device with an electrothermal atomiser, and mass spectrometer for atomic and molecular analysis
Dispositif d'analyse avec atomiseur électrothermique et spectromètre de masse pour analyse moléculaire et atomique

(30) Priorität: 11.07.1990 DE 4022061
(43) Veröffentlichungstag der Anmeldung: 15.01.1992
(73) Patentinhaber: SPECTRO ANALYTICAL INSTRUMENTS Gesellschaft für analytische Messgeräte mbH, D-47533 Kleve (DE)
(72) Erfinder: Falk, Heinz, Prof. Dr., W-4190 Kleve (DE); Wollnik, Hermann, Prof. Dr., W-6301 Fernwald 2 (DE)
(74) Vertreter: COHAUSZ HASE DAWIDOWICZ & PARTNER

(56) Entgegenhaltungen:
- DE-A- 3 718 244
- US-A- 3 548 188
- JOURNAL OF APPLIED PHYSICS. Bd. 64, Nr. 5, September 1988, NEW YORK US Seiten 2271 - 2278; J G PRUETT: 'CLUSTER SIZE AND TEMPERATURE MEASUREMENT IN A PURE VAPOR SOURCE EXPANSION'
- CRC CRITICAL REVIEWS IN ANALYTICAL CHEMISTRY Bd. 19, Nr. 1, 1988, NEW YORK Seiten 29 - 64; H. FALK: 'GRAPHITE FURNACES AS ATOMISERS AND EMISSION SOURCES IN ANALYTICAL ATOMIC SPECTRTOMETRY'
- RAPID COMMUNICATIONS IN MASS SPECTROMETRY Bd. 2, Nr. 5, 1988, Seiten 83 - 85; R GRIX: 'A TIME-OF-FLIGHT MASS ANALYSER WITH HIGH RESOLVING POWER'

## Beschreibung

Die Erfindung betrifft eine neuartige Analysenvorrichtung zur quantitativen Konzentrationsbestimmung von Bestandteilen fester, flüssiger oder aerosolförmiger Proben, vorzugsweise im Spurenbereich unter Verwendung eines elektrothermischen Atomisators (ETA) in Verbindung mit einem Massenspektrometer (MS).

Die Analysenvorrichtung soll einen geringen Probenbedarf im µl-Bereich, niedrige absolute Nachweisgrenzen bis unterhalb des pg-Bereiches, einen hohen dynamischen Bereich des analytischen Signals und geringe Störungen der Spurenbestimmungen durch Hauptbestandteile der Probe gewährleisten.

Es ist bekannt, daß Massenspektrometer zur Elementanalyse fester Proben durch Anwendung eines Funkenionisations-MS bzw. einer Glimmentladung in Verbindung mit MS US-Patent 4,794,252, und die Analyse flüssiger und aerosolförmiger Proben mittels induktivgekoppeltem Plasma, ICP-MS, möglich sind. Funken-MS und Glimmentladungs-MS sind geräte- und zeitaufwendig und eignen sich nicht für die Analyse flüssiger oder aerosolförmiger Proben. ICP-MS erfordert aufgrund des bei Atmosphärendruck betriebenen ICP hohe Pumpleistungen für ein differentielles Pumpsystem zur Aufrechterhaltung des Hochvakuums im MS. Dabei sind sowohl die Probeneinbringung über ein Zerstäubersystem als auch die Überführung der Ionen aus dem ICP ins MS sehr ineffizient, was die Nachweisempfindlichkeit begrenzt und relativ hohe Probenmengen im ml-Bereich erfordert.

Die Einbringung von getrockneten Aerosolen der Analysenprobe in ein MS ist bekannt US-Patent 4,403,147. Derartige Systeme erfordern einen Trägergasstrom zum Transport des Aerosols, somit ebenfalls hohe Pumpleistungen analog ICP-MS. Atomisierung und Ionisation des Aerosols erfordern einen zusätzlichen hohen Aufwand zur Erreichung einer akzeptablen Effektivität.

In üblichen Quadrupol-Massenspektrometern, wie z.Zt. in der ICP-MS, werden zu jedem Zeitpunkt nur Ionen einer bestimmten Ionenmasse registriert, während die Ionen aller anderen Massen verloren gehen. Dasselbe gilt für Sektorfeld-Massenspektrometer mit einem einzelnen Austrittsspalt. In beiden Fällen tragen deshalb typisch nur 0,1 % oder 0,01 % der einmal gebildeten Ionen zur registrierten Intensität im Spektrum bei. Kann man dagegen alle während einer längeren Zeit gebildeten Ionen in einer Speichereinrichtung für eine Weile vor einer Massenanalyse aufheben und ein Massenspektrometer mit einem Massen-Simultannachweis verwenden, so werden auch alle oder doch ein sehr großer Prozentsatz aller einmal gebildeten Ionen auch nachgewiesen.

Aus der Atomabsorptions-Spektrometrie ist bekannt, daß mit elektrothermischen Atomisatoren sehr hohe Effektivitäten der Atomisierung erzielbar sind. (H.F. Falk, CRC Critical Reviews 19, Issue 1, p. 29-64, New York 1988). Diese Atomisatoren werden jedoch bei Atmosphärendruck betrieben und sind in dieser Form nicht zur Kopplung mit einem MS geeignet.

Verschiedene Realisierungen für Ionenfallen, die sowohl auf der Basis von elektro-magnetischen als auch elektro-statischen Wirkungen beruhen, sind bekannt. Weiterhin sind Kombinationen von Flugzeitmassenspektrometern mit Ionenfallen realisiert worden. ("Rapid Communications in Mass Spectrometry" 2, 1988, 83-85). Diese eignen sich aufgrund ihrer Konstruktion jedoch nicht zur Analyse fester, flüssiger oder aerosolförmiger Proben.

Bei Ionenfallen kann man durch geeignete Steuerung erreichen, daß dieselbe Falle zuerst als Speichereinrichtung und sodann später als Massenanalysatoreinrichtung verwendet wird. Bei Einsatz einer separaten Speichereinrichtung kann man die Ionen nach einer Extraktion in ein beliebiges Massenspektrometer, d.h. etwa auch ein Quadrupolspektrometer oder aber einen Sektorfeld-Massenanalysator einschiessen. Im Falle von Laufzeit-Massenspektrometern ist es hierbei zusätzlich von Vorteil, daß man erreichen kann, daß die Ionen verschiedener Massen ziemlich gleichzeitig (oder nach genau definierten Massen-abhängigen Zeitintervallen) starten. Dieses "gleichzeitige" Starten kann man etwa dadurch erreichen, daß man das Zeitintervall, in dem die gespeicherten Ionen entlassen werden ( ca. 1 µsec) nach einer Beschleunigungsstrecke auf wesentlich kürzere Zeiten (ca. 10nsec) zusammendrängt ähnlich dem Klystron-Bunching. Leider wird dadurch die Energiebreite der Ionenverteilung deutlich größer, so daß das verwendete Laufzeit-Massenspektrometer relativ gut Energie-Isochron sein muß. Dies heißt, daß Ionen einer Masse, deren Energien leicht verschieden sind, die gleichen Flugzeiten haben, was man dadurch erreicht, daß die Ionen höherer Energie den Detektor nur auf einem geeignet dimensionierten Umweg erreichen können, z.B. duch den Einsatz eines Ionenspiegels, in den Ionen höherer Energie tiefer eindringen.

Der Erfindung liegt die Aufgabe zugrunde, eine Analysenvorrichtung anzugeben, welche eine Analyse der Element- und Molekül-Bestandteile fester, flüssiger oder aerosolförmiger Proben mit dem für die Massenspektrometrie typischen hohen Nachweisvermögen gestattet, ohne hohe Pumpleistungen für ein differentielles Pumpsystem zwischen Probeneinbringung und MS zu benötigen.

Diese Aufgabe wird erfindungsgemäß durch die Analysenvorrichtung gemäß Anspruch 1 und das Verfahren gemäß Anspruch 14 gelöst.

Unter Verwendung des Prinzips der Elektronenstoß-Ionisation kann man solch eine Speicher-Ionenquelle aufbauen (DE 3718244) und somit im Kombination mit einem Laufzeit-Massenspektrometer außerordentlich empfindlich Gasgemische analysieren.

Die Probeneinbringung in dem ETA kann in bekannter Weise als brikettierter Feststoff, mittels Mikroliter-Dosiereinrichtung oder Impactor für feuchte oder trockene Aerosole erfolgen.

Zur Verminderung von Störeinflüssen auf die Messung der Spurenbestandteile durch die Hauptkomponenten der Probe kann man die Temperatur des ETA derart steuern, daß eine zeitliche Trennung der Verdampfung der beiden Anteile erfolgt und während des Verdampfens der Hauptkomponenten der Ionisator und/oder die Ionenspeicher abgeschaltet werden. Mithin belasten die Hauptkomponenten weder die Kapazität der Ionenfalle noch die des Ionendetektors.

Durch eine Kopplung der Temperatur-Steuereinrichtung des ETA mit dem Meßsignal des MS kann eine optimale Heizgeschwindigkeit erreicht und eine Überschreitung des Meßbereiches des MS vermieden werden.

Unter diesen Bedingungen ist auch eine Modulation der Ionisationsenergie möglich. Letztere Betriebsart kann zur abwechselnden Messung atomarer und molekularer Bestandteile dienen.

Die erfindungsgemäße Analysenvorrichtung bietet den Vorteil einer Steigerung des Nachweisvermögens in den Pico-Gramm-Bereich und bis in den Femto-Gramm-Bereich bei gleichzeitiger Verminderung des apparativen Aufwandes durch Vermeidung eines differentiellen Pumpsystems. Darüber hinaus können Störungen der Messungen durch Matrixeinflüsse minimiert werden.

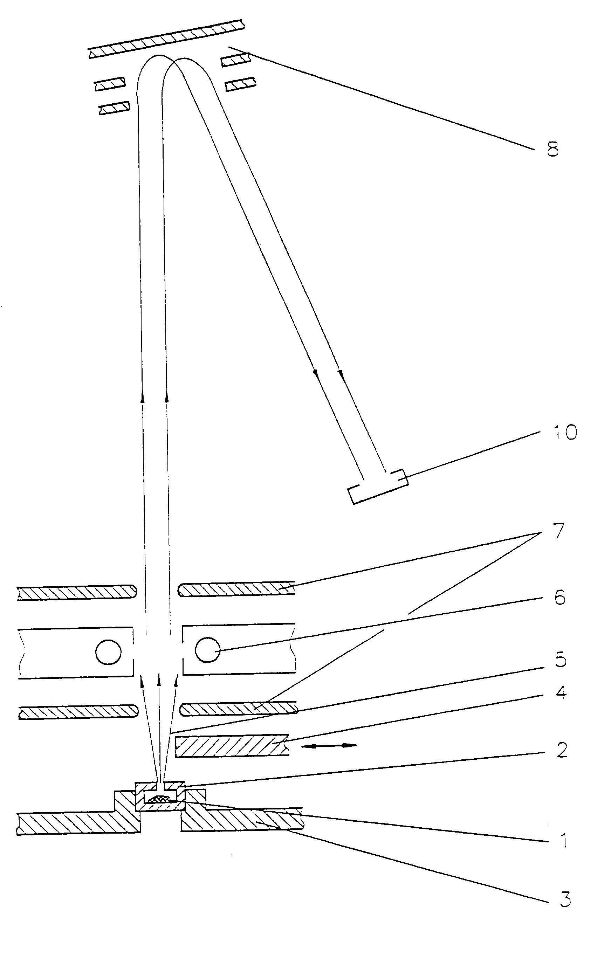

Ein Ausführungsbeispiel der Erfindung ist in der Zeichnung dargestellt und wird im folgenden näher beschrieben.

In der Zeichnung ist ein Ausführungsbeispiel der erfindungsgemäßen Vorrichtung unter Verwendung eines Flugzeit-MS dargestellt. Das gesamte System befindet sich in einem Hochvakuumgefäß, dessen Gestaltung nicht funktionsbestimmend und deshalb in der Zeichnung nicht enthalten ist.

Die Probe 1 wird in das ETA-Probengefäß 2 eingebracht während die Vakuumschleuse 4 den Atomisator vom übrigen Teil der Anordnung abschließt. Die Probenvorbehandlung kann nunmehr durch Aufheizen des Probengefässes 2 z.B. mit Hilfe einer an die Elektroden 3 angelegten elektrischen Spannung erfolgen oder aber durch Mikrowellen oder Lasereinstrahlen. Erforderlichenfalls kann während der Probenvorbehandlung der ETA mit Schutzgas gespült werden. Der den ETA enthaltende Teil der Vakuumapparatur wird nach Abschluß der Probenvorbehandlung evakuiert und die Vakuumschleuse 4 geöffnet. Eine Aufheizung des ETA durch eine an 3 angelegte Spannung oder aber durch Mikrowellen oder Lasereinstrahlung führt zur Verdampfung bzw. Atomisierung der Probenbestandteile. Der Probendampf bewegt sich innerhalb eines durch die düsenförmig ausgebildete Austrittsöffnung des ETA definierten Kegels 5 in Richtung auf den Ionisator 6. Die gebildeten Ionen gelangen in den Ionenspeicher 7, der vorzugsweise als elektrostatische Potentialmulde ausgebildet ist, wobei diese Potentialmulde statisch sein kann oder aber pulsierend wie in einer Ionenfalle.

Die Ionen werden sodann nach einer gewissen Sammelzeit aus der Speichereinheit extrahiert, ähnlich wie bei einem Klystron longitudinal zusammengeführt und einem weitgehend Energie-Isochronen Laufzeit-Massenspektrometer zugeführt, das einen Ionenreflektor 8 enthält. Die der verschiedenen Massen wegen verschiedenen Flugzeiten werden sodann mit einem Ionendetektor nachgewiesen.

## Patentansprüche

1. Analysenvorrichtung zur Messung der Konzentrationen von Element- oder Molekülbestandteilen einer festen, flüssigen oder als Aerosol vorliegenden Probe (1), mit einem elektrothermischen Atomisator, einer Ionisator (6) sowie mit einem Massenspektrometer (8, 10), **dadurch gekennzeichnet**, daß sich der Atomisator in einer separaten vakuumdichten Kammer befindet und in seiner Betriebsstellung in einer gegenüber der Ionisator (6) verschließbaren Vakuumschleuse (4) angeordnet ist.

2. Analysenvorrichtung nach Anspruch 1, **dadurch gekennzeichnet**, daß der Atomisator zur thermischen Vorbehandlung der Probe (1) vorgesehen ist.

3. Analysenvorrichtung nach einem der vorhergehenden Ansprüche, **dadurch gekennzeichnet**, daß die thermische Vorbehandlung und/oder die Verdampfung durch elektrischen Stromfluß und/oder Mikrowelleneinstrahlung und/oder Lasereinstrahlung erfolgt.

4. Analysenvorrichtung nach Anspruch 1 bis 3, **dadurch gekennzeichnet**, daß die Probe (1) als flüssiges oder festes Aerosol über einen Gasstrom in den Atomisator eingebracht wird.

5. Analysenvorrichtung nach Anspruch 1 bis 3, **dadurch gekennzeichnet**, daß die flüssige oder feste Probe (1) über eine mechanische Vorrichtung in den Atomisator eingebracht wird.

6. Analysenvorrichtung nach Anspruch 1 bis 3, **dadurch gekennzeichnet**, daß die flüssige oder feste Probe (1) extern in den Atomisator eingebracht wird und daß sodann der ganze Atomisator über eine Vakuumschleuse (4) in das Analysensystem eingeführt wird.

7. Analysenvorrichtung nach Anspruch 1 bis 6, **dadurch gekennzeichnet**, daß über eine Steuervorrichtung für die Atomisatortemperatur ein Temperaturprogramm für den elektrothermischen Atomisator wählbar ist, welches die Verdampfung der Hauptbestandteile der Probe (1) (Matrix) zu anderen Zeitpunkten bewirkt als die der zu bestimmenden Elemente und daß die Ionisator (6) während der Verdampfung der Matrix unwirksam ist.

8. Analysenvorrichtung nach Anspruch 1 bis 7, **dadurch gekennzeichnet**, daß der Ionisator (6) eine Ionenfalle (7) zugeordnet ist, wobei die Speicherzeit der Ionenfalle (7) wesentlich kleiner ist als die Verdampfungszeit der jeweils zu bestimmenden Substanz, und wobei die Heizrate des elektrothermischen Atomisators so gewählt wird, daß die Anzahl der gespeicherten Ionen innerhalb vorgewählter Grenzen bleibt.

9. Analysenvorrichtung nach Ansprüche 1 bis 8, **dadurch gekennzeichnet**, daß die Probenverdampfung im Hochvakuum stattfindet, der elektrothermische Atomisator als Atom- bzw. Molekularstrahlquelle ausgebildet und dessen Strahlachse auf die Ionisator (6) gerichtet ist.

10. Analysenvorrichtung nach Ansprüchen 1 bis 9, **dadurch gekennzeichnet**, daß der Atomisator im wesentlichen aus Graphit besteht.

11. Analysenvorrichtung nach Ansprüchen 1 bis 10, **dadurch gekennzeichnet**, daß der Atomisator aus Graphit oder Keramik besteht und ganz oder teilweise mit pyrolytischem Kohlenstoff beschichtet ist.

12. Analysenvorrichtung nach Ansprüche 1 bis 9, **dadurch gekennzeichnet**, daß der Atomisator im wesentlichen aus einem hochschmelzenden Metall (z. B. in Form eines Bandes) besteht.

13. Analysenvorrichtung nach Ansprüchen 1 bis 12, **dadurch gekennzeichnet**, daß der die Probe (1) enthaltende Teil des elektrothermischen Atomisators ein einseitig offener, zylindrischer, konischer, quader- oder pyramidenähnlicher Hohlkörper ist.

14. Verfahren zur Messung von Konzentrationen von Element - oder Molekülbestandteilen einer festen, flüssigen oder als Aerosol vorliegenden Probe (1), wobei die Probe (1) von einem elektrothermischen Atomisator erforderlichenfalls getrocknet erforderlichenfalls verascht, verdampft, der Probendampf ionisiert, die gebildeten Ionen in einem Ionenspeicher (7) gesammelt und die gespeicherten Ionen während einer gegen die Speicherzeit möglichst kurzen Zeit einem vorzugsweise simultan arbeitenden Massenspektrometer (8,10) zugeführt und die Häufigkeiten der jeweiligen Ionenmassen gemessen werden, **dadurch gekennzeichnet**, daß sich der elektrothermische Atomisator in einer separaten vakuumdichten Kammer befindet und zwischen diesem und dem Ionisator eine Vakuumschleuse (4) vorhanden ist, die vor der Einbringung der Probe (1) geschlossen wird und erst nach der erforderlichen Probenvorbehandlung, wie Trocknung flüssiger Proben (1) durch Temperaturerhöhung oder Druckverminderung am Atomisator sowie einer möglichen Veraschung der Probe (1) und Abpumpen der Atomisatorkammer, geöffnet wird.

15. Verfahren nach Anspruch 14, **dadurch gekennzeichnet**, daß die Einbringung flüssiger Proben (1) durch Eintrocknung der zerstäubten Probe auf dem vorgeheizten elektrothermischen Atomisator erfolgt.

16. Verfahren nach Ansprüchen 14 und 15, **dadurch gekennzeichnet**, daß der mit der Probe (1) wechselwirkende Teil des elektrothermischen Atomisators als leicht auswechselbares Verschleißteil ausgebildet ist.

17. Verfahren nach Ansprüchen 15 bis 16, **dadurch gekennzeichnet**, daß die Ionisierung des Probendampfes durch Elektronenstoß erfolgt.

18. Verfahren nach Ansprüchen 14 bis 17, **dadurch gekennzeichnet**, daß die Ionisierung des Probendampfes in einer separaten Ionen-Speicherquelle (6,7) vorgenommen wird.

19. Verfahren nach Ansprüchen 14 bis 18, **dadurch gekennzeichnet**, daß die gespeicherten Ionen in ein Quadrupol-Massenspektrometer eingeschossen werden.

20. Verfahren nach Ansprüchen 14 bis 18, **dadurch gekennzeichnet**, daß die gespeicherten Ionen in ein Sektorfeld-Massenspektrometer eingeschossen werden.

21. Verfahren nach Ansprüchen 14 bis 18, **dadurch gekennzeichnet**, daß die Ionenspeicherung in einer nachfolgend als Massenanalysator eingesetzten Ionenfalle (7) stattfindet.

22. Verfahren nach Ansprüchen 14 bis 21, **dadurch gekennzeichnet**, daß die maximale Ionisationsenergie des Ionisators derart variiert wird, daß abwechselnd Atom- und Molekül ionen eines Analyten gemessen werden können.

23. Verfahren nach Ansprüchen 14 bis 21, **dadurch gekennzeichnet**, daß die Ionisation in einer Mikrowellen- oder Fotoionisationseinrichtung erfolgt.

24. Verfahren nach Ansprüchen 14 bis 18; 21 bis 23, **dadurch gekennzeichnet**, daß ein Flugzeit-Massenspektrometer (8,10) verwendet wird.

25. Verfahren nach Ansprüchen 14 bis 18; 21 bis 24, **dadurch gekennzeichnet**, daß der Gasgehalt einer in den Atomisator eingebrachten Festkörperprobe (1) durch eine angepaßte Heizrate freigesetzt und detektiert wird.

26. Verfahren nach Ansprüchen 14 bis 25, **dadurch gekennzeichnet**, daß nicht das gesamte Massenspektrum registriert wird, sondern nur diejenige Ionenmasse(n), die für die geplante Messung von Bedeutung ist (sind).

## Claims

1. An analytical apparatus for the measurement of the concentrations of elemental or molecular components of a solid, liquid or aerosol sample (1), having an electrothermal atomizer, an ionizer (6) and a mass spectrometer (8, 10) characterized in that the atomizer is placed in a separate vacuum-tight chamber and is disposed in its operative position in an air lock (4) which can be closed in relation to the ionizer (6).

2. An analytical apparatus according to claim 1, characterized in that the atomizer is provided for the thermal pretreatment of the sample (1).

3. An analytical apparatus according to one of the preceding claims, characterized in that the thermal pretreatment and/or evaporation is performed by electric current conduction and/or microwave irradiation and/or laser irradiation.

4. An analytical apparatus according to claims 1 to 3, characterized in that the sample (1) is introduced as a liquid or solid aerosol into the atomizer via a gas flow.

5. An analytical apparatus according to claims 1 to 3, characterized in that the liquid or solid sample (1) is introduced into the atomizer via a mechanical device.

6. An analytical apparatus according to claims 1 to 3, characterized in that the liquid or solid sample (1) is introduced externally into the atomizer, and then the whole atomizer is introduced into the analytical system via an airlock (4).

7. An analytical apparatus according to claims 1 to 6, characterized in that a control device for the atomizer temperature is used to select for the electrothermal atomizer a temperature programme which effects the evaporation of the main components of the sample (1) (matrix) at other times than those of the elements to be determined, the ionizer (6) being inoperative during the evaporation of the matrix.

8. An analytical apparatus according to claims 1 to 7, characterized in that associated with the ionizer (6) is an ion trap (7), the storage time of the ion trap (7) being substantially shorter than the evaporation time of each substance to be determined, and the heating rate of the electrothermal atomizer being so selected that the number of stored ions remains within preselected limits.

9. An analytical apparatus according to claims 1 to 8, characterized in that the sample is evaporated in a high vacuum, the electrothermal atomizer takes the form of an atomic or molecular radiation source, and its axis of radiation is directed at the ionizer (6).

10. An analytical apparatus according to claims 1 to 9, characterized in that the atomizer mainly consists of graphite.

11. An analytical apparatus according to claims 1 to 10, characterized in that the atomizer consists of graphite or ceramics and is wholly or partially coated with pyrolytic carbon.

12. An analytical apparatus according to claims 1 to 9, characterized in that the atomizer mainly consists of a high-melting metal (e.g., in the form of a strip).

13. An analytical apparatus according to claims 1 to 12, characterized in that the part of the electrothermal atomizer containing the sample (1) is a cylindrical, conical, parallelipipedic or pyramid-like hollow member open on one side.

14. A process for the measurement of concentrations of elemental or molecular components of a solid, liquid or aerosol sample (1), wherein the sample (1) is if necessary dried by an electrothermal atomizer and if necessary incinerated and evaporated, the vapour of the sample is ionized, the ions formed are collected in an ion store (7) and the stored ions are supplied during a period as brief as possible in relation to the storage time to a preferably simultaneously operating mass spectrometer (8, 10) and the frequencies of the particular ion masses are measured, characterized in that the electrothermal atomizer is situated in a separate vacuum-tight chamber, and provided between said atomizer and the ionizer is an airlock (4), which is closed prior to the introduction of the sample (1) and opened only following the necessary pretreatment of the sample, such as the drying of liquid samples (1) by raising the temperature or reducing the pressure at the atomizer and also a possible incineration of the sample (1) and the pumping-out of the atomizer chamber.

15. A process according to claim 14, characterized in that liquid samples (1) are introduced by drying the atomized sample on the preheated electrothermal atomizer.

16. A process according to claims 14 and 15, characterized in that the part of the electrothermal atomizer interacting with the sample (1) takes the form of a readily interchangeable wearing part.

17. A process according to claims 15 and 16, characterized in that the vapour of the sample is ionized by electron impact.

18. A process according to claims 14 to 17, characterized in that the vapour of the sample is ionized from a separate ion store source (6, 7).

19. A process according to claims 14 to 18, characterized in that the stored ions are shot into a quadrupole mass spectrometer.

20. A process according to claims 14 to 18, characterized in that the stored ions are shot into a sector field mass spectrometer.

21. A process according to claims 14 to 18, characterized in that the ions are stored in an ion trap (7) subsequently used as a mass analyzer.

22. A process according to claims 14 to 21, characterized in that the maximum ionization energy of the ionizer is so varied that the atomic and molecular ions of the subject of analysis can be measured.

23. A process according to claims 14 to 21, characterized in that ionization is performed in a microwave or photo-ionization apparatus.

24. A process according to claims 14 to 18; 21 to 23, characterized in that a time of flight mass spectrometer (8, 10) is used.

25. A process according to claims 14 to 18; 21 to 23, characterized in that the gas content of a solid sample (1) introduced into the atomizer is released and detected by a suitable heating rate.

26. A process according to claims 14 to 25, characterized in that the whole mass spectrum is not recorded, solely that ion mass or masses which is or are important for the planned measurement.

## Revendications

1. Dispositif d'analyse pour la mesure de concentrations de parties constitutives élémentaires ou moléculaires d'une éprouvette (1) solide, fluide ou existant sous forme d'aérosol, avec un atomiseur électrothermique, un ioniseur (6), ainsi qu'avec un spectromètre de masse (8, 10),
caractérisé en ce que l'atomiseur se trouve dans une chambre séparée étanche au vide et, dans sa position de marche, est disposé dans un sas à vide (4) pouvant être fermé par rapport à l'ioniseur (6).

2. Dispositif d'analyse selon l'une des revendications précédentes,
caractérisé en ce que l'atomiseur est prévu pour le prétraitement thermique de l'éprouvette (1).

3. Dispositif d'analyse selon l'une des revendications précédentes,
caractérisé en ce que le prétraitement thermique et/ou la vaporisation sont réalisés par conduction de courant électrique et/ou faisceau de micro-ondes et/ou faisceau laser.

4. Dispositif d'analyse selon la revendication 1 à 3,
caractérisé en ce que l'éprouvette (1) est introduite dans l'atomiseur sous forme d'aérosol fluide ou solide par l'intermédiaire d'un courant de gaz.

5. Dispositif d'analyse selon la revendication 1 à 3,
caractérisé en ce que l'éprouvette (1) fluide ou solide est introduite dans l'atomiseur par l'intermédiaire d'un dispositif mécanique.

6. Dispositif d'analyse selon la revendication 1 à 3,
caractérisé en ce que l'éprouvette (1) fluide ou solide est introduite extérieurement dans l'atomiseur et que, ensuite, la totalité de l'atomiseur est introduite dans le système d'analyse par l'intermédiaire d'un sas à vide (4).

7. Dispositif d'analyse selon la revendication 1 à 6,
caractérisé en ce que, par l'intermédiaire d'un dispositif de commande pour la température de l'atomiseur, un programme de températures pour l'atomiseur électrothermique peut être choisi, qui opère la vaporisation des parties constitutives principales de l'éprouvette (1) (matrice) à des instants différents de ceux des éléments à déterminer et que l'ioniseur (6) est inactif pendant la vaporisation de la matrice.

8. Dispositif d'analyse selon la revendication 1 à 7,
caractérisé en ce qu'un piège à ions (7) est adjoint à l'ioniseur (6), le temps de stockage du piège à ions (7) étant considérablement plus faible que le temps de vaporisation de la substance respective à déterminer et l'impulsion de chauffage de l'atomiseur électrothermique étant choisie de telle manière que le nombre des ions stockés reste à l'intérieur de limites prédéterminées.

9. Dispositif d'analyse selon les revendications 1 à 8,
caractérisé en ce que la vaporisation de l'éprouvette a lieu sous vide poussé, l'atomiseur électrothermique est réalisé sous forme de source de rayonnement atomique ou moléculaire et dont l'axe de rayonnement est dirigé sur l'ioniseur (6).

10. Dispositif d'analyse selon les revendications 1 à 9,
caractérisé en ce que l'atomiseur est constitué essentiellement de graphite.

11. Dispositif d'analyse selon les revendications 1 à 10,
caractérisé en ce que l'atomiseur est constitué de graphite ou de céramique et est totalement ou partiellement recouvert de carbone pyrolytique.

12. Dispositif d'analyse selon les revendications 1 à 9,
caractérisé en ce que l'atomiseur est constitué essentiellement d'un métal à point de fusion élevé (par exemple sous forme de feuillard).

13. Dispositif d'analyse selon les revendications 1 à 12,
caractérisé en ce que la partie de l'atomiseur électrothermique contenant l'éprouvette (1) est un corps creux ouvert d'un côté, cylindrique, conique ou analogue à un parallélépipède ou à une pyramide.

14. Procédé de mesure de concentrations de parties constitutives élémentaires ou moléculaires d'une éprouvette solide, fluide ou existant sous forme d'un aérosol, l'éprouvette (1) étant au cas où c'est nécessaire séchée, au cas où c'est nécessaire incinérée, vaporisée par un atomiseur électrothermique, la vapeur d'éprouvette étant ionisée, les ions formés étant rassemblés dans un piège à ions (7) et les ions stockés étant amenés, pendant un temps le plus court possible par rapport au temps de stockage, à un spectromètre de masse (8, 10) travaillant de préférence en simultané et la fréquence des masses ioniques respectives étant mesurée,
caractérisé en ce que l'atomiseur électrothermique se trouve dans une chambre séparée étanche au vide et un sas à vide (4) est disponible entre celle-ci et l'ioniseur, lequel sas à vide est fermé avant l'introduction de l'éprouvette (1) et n'est ouvert qu'après le prétraitement nécessaire de l'éprouvette, tel que le séchage d'éprouvettes (1) fluides par élévation de température ou réduction de pression à l'atomiseur ainsi qu'après une incinération possible de l'éprouvette (1) et l'évacuation par pompe de la chambre de l'atomiseur.

15. Procédé selon la revendication 14,
caractérisé en ce que l'introduction d'éprouvettes (1) fluides est effectuée par séchage de l'éprouvette atomisée sur l'atomiseur électrothermique préchauffé.

16. Procédé selon les revendications 14 et 15,
caractérisé en ce que la partie de l'atomiseur électrothermique interagissant avec l'éprouvette (1) est réalisée sous forme de pièce d'usure perdue facilement remplaçable.

17. Procédé selon les revendications 15 à 16,
caractérisé en ce que l'ionisation de la vapeur de l'éprouvette est effectuée par choc électronique.

18. Procédé selon les revendications 14 à 17,
caractérisé en ce que l'ionisation de la vapeur de l'éprouvette est faite dans une source de stockage d'ions (6, 7) séparée.

19. Procédé selon les revendications 14 à 18,
caractérisé en ce que les ions stockés sont injectés dans un spectromètre de masse quadripolaire.

20. Procédé selon les revendications 14 à 18,
caractérisé en ce que les ions stockés sont injectés dans un spectromètre de masse à champ secteur.

21. Procédé selon les revendications 14 à 18,
caractérisé en ce que le stockage des ions a lieu dans un piège à ions (7) utilisé ensuite comme analyseur de masse.

22. Procédé selon les revendications 14 à 21,
caractérisé en ce qu'on fait varier l'énergie d'ionisation maximale de l'ioniseur de telle manière que des ions alternativement atomiques et moléculaires d'une substance analysée puissent être mesurés.

23. Procédé selon les revendications 14 à 21,
caractérisé en ce que l'ionisation a lieu dans un dispositif à micro-ondes ou de photo-ionisation.

24. Procédé selon les revendications 14 à 28 ; 21 à 23,
caractérisé en ce qu'on utilise un spectromètre de masse à temps de vol (8, 10).

25. Procédé selon les revendications 14 à 18 ; 21 à 24,
caractérisé en ce que la teneur en gaz d'une éprouvette (1) à corps solide introduite dans l'atomiseur est fixée librement par une impulsion de chauffage adaptée et détectée.

26. Procédé selon les revendications 14 à 25,
caractérisé en ce qu'on n'enregistre pas la totalité du spectre de masse mais seulement celle de la (les) masse(s) ionique(s) qui est (sont) importante(s) pour la mesure envisagée.
